# EUROPEAN PATENT APPLICATION

(11) **EP 4 803 750 A1**
(43) Date of publication of application: **09.09.2026**
(21) Application number: 26162751.7
(22) Date of filing: 05.03.2026
(51) Int. Cl.: F04B 39/00, F04B 39/14

(54) **COMPRESSOR MOUNT SYSTEM FOR TRANSPORT REFRIGERATION UNIT**

(30) Priority: 05.03.2025 US 202563767239 P
(71) Applicant: Carrier Corporation, Palm Beach Gardens, FL 33418 (US)
(72) Inventor: ELBANNA, Ahmed, East Syracuse, NY 13057 (US); VENNE, Samuel, East Syracuse, NY 13057 (US); VERMA, Parmesh, East Syracuse, NY 13057 (US); JOHNSON, Eric, East Syracuse, NY 13057 (US)
(74) Representative: Dehns

(57) **Abstract**

A compressor system of a transport refrigeration system includes a compressor (100) having a compressor housing (102), a compressor base (104) located at a bottom (106) of the compressor housing (102), and a compressor head (120) arranged at a top of the compressor housing (102). The compressor (100) is secured within the transport refrigeration system at a plurality of attachment points (110a-110d, 130). At least one attachment point (110a-110d) of the plurality of attachment points (110a-110d, 130) is arranged at the compressor base (104) and a single attachment point (130) of the plurality of attachment points (110a-110d, 130) is arranged at the compressor head (120).

## Description

### BACKGROUND

Embodiments of the present invention pertain to the art of heating, ventilation, air-conditioning and refrigeration (HVAC&R) systems, and more particularly, to a mounting system for a compressor in an HVAC&R system.

In existing transport refrigeration units, the compressor is typically soft-mounted to the chassis of the trailer via six shock mounts arranged at six different locations about the compressor. These six shock mounts include 4 shock mounts at the compressor base and two shock mounts at a compressor head. The current design includes a plurality of brackets mounted to the compressor head and defining a flange offset from a surface of the compressor head. A second bracket is mounted to the chassis and is operably coupled to the flange via the two shock mounts. Accordingly, the existing configuration is expensive due to the complexity of the design and the time for assembly thereof. It is therefore desirable to provide a compressor mounting system having fewer components and reduced complexity while providing the same shock-absorption capability.

### BRIEF DESCRIPTION

According to a first aspect of the present invention, a compressor system of a transport refrigeration system includes a compressor having a compressor housing, a compressor base located at a bottom of the compressor housing, and a compressor head arranged at a top of the compressor housing. The compressor is secured within the transport refrigeration system at a plurality of attachment points. At least one attachment point of the plurality of attachment points is arranged at the compressor base and a single attachment point of the plurality of attachment points is arranged at the compressor head.

Optionally, the compressor system includes a mounting bracket arranged at the compressor head and a vibration isolator coupled to the mounting bracket.

Optionally, the mounting bracket is welded to the compressor head.

Optionally, the mounting bracket is mechanically fastened to the compressor head.

Optionally, the mounting bracket is integrally formed with the compressor head.

Optionally, the vibration isolator is mechanically fastened to the mounting bracket.

Optionally, the mounting bracket includes a mounting hole and the vibration isolator is press fit within the mounting hole. The mounting hole may also be termed a first mounting hole.

Optionally, a distal end of the vibration isolator is positioned proximate a secondary component.

Optionally, a distal end of the vibration isolator is mechanically coupled to a secondary component.

Optionally, the single attachment point arranged at the compressor head includes a second mounting bracket and the vibration isolator is mechanically coupled to the secondary component via the second mounting bracket.

Optionally, the vibration isolator is mechanically fastened to the second mounting bracket.

Optionally, the second mounting bracket includes another mounting hole and the vibration isolator is press fit within the another mounting hole. The another mounting hole may also be termed a second mounting hole.

Optionally, the secondary component is a structural frame.

Optionally, the secondary component is a housing of a refrigeration unit of the transport refrigeration system.

Optionally, the secondary component is one of a suction line and a discharge line of the compressor.

Optionally, the mounting bracket is formed from a first material and the vibration isolator is formed from a second material, the first material having a greater stiffness than the second material.

Optionally, the mounting bracket is formed from steel.

Optionally, the single attachment point arranged at the compressor head includes a direct connection between the compressor head and a frame of the transport refrigeration system.

### BRIEF DESCRIPTION OF THE DRAWINGS

The following descriptions should not be considered limiting in any way. With reference to the accompanying exemplary drawings, like elements are numbered alike:
FIG. 1 is a perspective view of a transport refrigeration system having a refrigeration unit according to an embodiment;
FIG. 2 is a schematic diagram of an exemplary refrigeration unit for cooling a cargo area of a trailer;
FIG. 3 is a perspective view of a compressor of the refrigeration unit of FIGS. 1 and 2 according to an embodiment;
FIG. 4 is a schematic side view of a compressor of FIG. 3 according to an embodiment; and
FIG. 5 is a schematic side view of a compressor of FIG. 3according to another embodiment.

### DETAILED DESCRIPTION

A detailed description of one or more embodiments of the disclosed apparatus and method are presented herein by way of exemplification and not limitation with reference to the Figures.

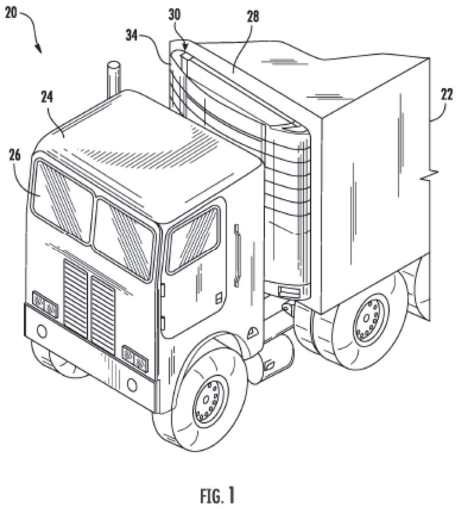

With reference now to FIG. 1, an example of a transport refrigeration system 20 is illustrated. In the illustrated, non-limiting embodiment, the transport refrigeration system is shown as a trailer system. As shown, the refrigerated trailer system 20 includes a cargo container or trailer 22 being towed or otherwise transported by a tractor 24 including an operator's compartment or cab 26 and also including a power source (not shown), such as an engine or motor for example, which acts as the drivetrain system of the system 20. A refrigeration unit 30 is operable to maintain cargo located within the trailer 22 at a selected temperature by cooling the cargo space of the trailer 22. As shown, the refrigeration unit 30 is typically mounted to the structure of the trailer 22, such as at a front wall 28 of the trailer 22 for example. Together, the refrigeration unit 30 and the cargo trailer 22 may form a refrigerated trailer system. It should be appreciated by those of skill in the art that embodiments described herein may be applied to any transport refrigeration system such as, for example shipping containers that are shipped by rail, sea (via a watercraft), or any other suitable container, without use of a tractor 24.

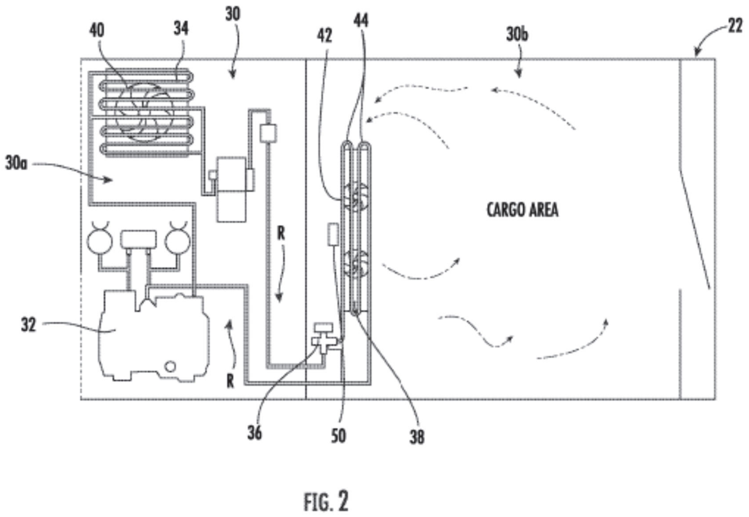

With reference to FIG. 2, an example of a basic refrigeration circuit of the refrigeration unit 30 is shown. The refrigeration unit 30 may be divided into two sections, a condenser section 30a and an evaporator section 30b. The condenser section 30a may disposed generally forward of a front wall 28 of the trailer 22 and is arranged in fluid communication with the ambient atmosphere external to the trailer 22 and the refrigeration unit 30 to exchange air and heat therewith. The evaporator section 30b is not in fluid communication with the ambient atmosphere to control temperature within the trailer 22. The refrigeration unit 30 includes a compressor 32, a condenser coil 34, an expansion device 36, and an evaporator coil 38 fluidly connected to one another to form a closed loop system. A fluid R, such as a refrigerant for example, is configured to flow from the compressor 32 to the condenser coil 34, expansion device 36, and evaporator coil 38 in series. A condenser fan 40, such as driven by a condenser motor (not shown) is configured to move a flow of air across an exterior of the condenser coil 34, and an evaporator fan 42, such as driven by an evaporator motor (not shown), may be used to drive a flow of fluid (air) across an exterior of the evaporator coil 38. It should be appreciated a simplified refrigeration circuit 30 is illustrated, and embodiments including additional components or cycle enhancements such as a subcooler, economizer, or valves for example, are also within the scope of the invention as set out in the appended claims.

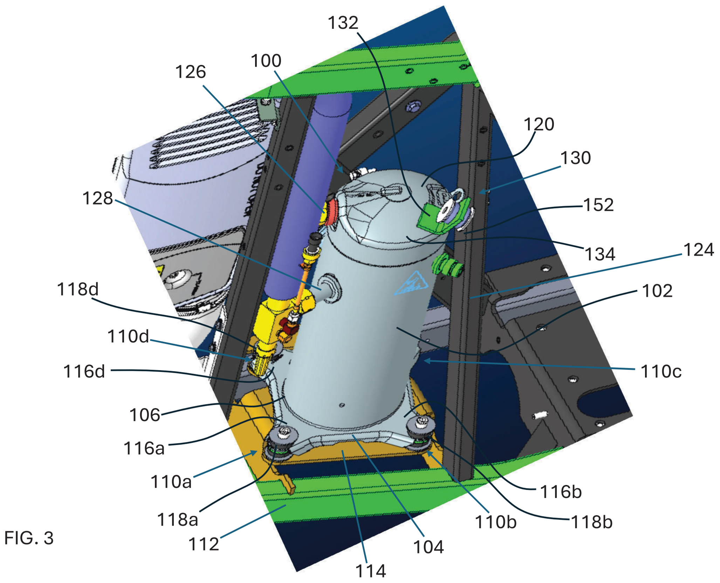

Referring now to FIG. 3, an example of a compressor 100 of the refrigeration unit 30, such as comparable to compressor 32 for example, is illustrated in more detail. In an embodiment, the compressor 100 is a variable speed compressor. Variable speed compressors are capable of operating at higher speeds than fixed speed compressors. The load on the compressor 100 is greater at these higher speeds, which results in increased vibration at the compressor 100. As shown, the compressor 100 includes a compressor housing 102 enclosing a compressor motor (not shown). A compressor base 104 is arranged at a bottom or base portion 106 of the compressor housing 102. The compressor base 104 includes a plurality of attachment points 110a-110d for securing the compressor 100 in position within the refrigeration system. For example, a base pan 112 may be mounted to a structural frame 114 of the trailer 22 or of a housing of the refrigeration unit 30 and the compressor base 104 may be operable to mount the compressor 100 to the base pan 112. In the illustrated, non-limiting embodiment, the compressor base 104 has four attachment points or mounting points, each being associated with or proximate a corner of the compressor base 104. Although the sides of the compressor base 104 illustrated in FIG. 3 are contoured to define a plurality of legs 116a-116d, each forming a respective corner of the compressor base 104, embodiments where the compressor base 104 is generally rectangular or square in shape are also contemplated herein.

A vibration isolator 118a-118d, such as a rubber grommet for example, may be coupled to the compressor base 104 at each of the attachment points 110a-110d. In an embodiment, each of the vibration isolators 118a-118d is secured to the base pan 112 via a fastener (not shown). The fastener may be extendable through an aligned opening formed in the base pan 112, a center of the vibration isolator 118a-118d, and a mounting opening formed in the compressor base 104. However, in other embodiments, a portion of the vibration isolator 118a-118d may extend through a mounting hole formed in the compressor base 104, or alternatively, or additionally, through the hole formed in the base pan 112. In embodiments including one or more fasteners, the fasteners may be tightened to apply a force or preload to the vibration isolator 118a-118d, thereby causing compression of the vibration isolator 118a-118d. During operation, vibration of the compressor 100 is transferred to the vibration isolators 118a-118d at the four attachment points 110a-110d. The vibration isolators 118a-118d are operable to reduce and in some embodiments prevent the transmission of these vibrations to the base pan 112.

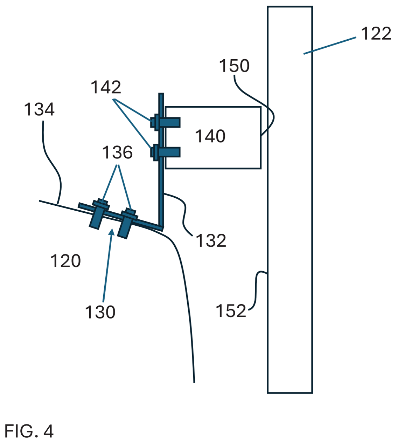

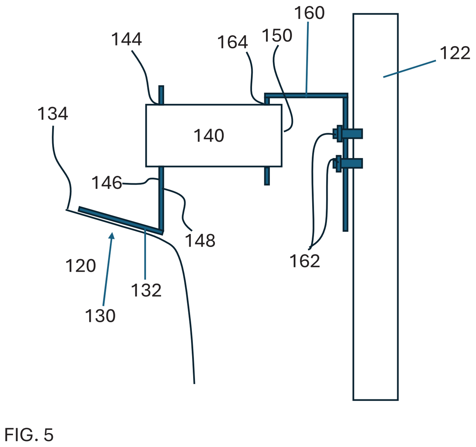

With continued reference to FIG. 3 and further reference to FIGS. 4 and 5, the compressor housing 102, such as near a top 120 thereof for example, may additionally be affixed to a secondary component, represented at 122. Examples of the secondary component 122 include but are not limited to the structural frame 124 of the trailer 22, the housing (not shown) of the refrigeration unit 30, the suction line fluidly connected to an inlet port 126 of the compressor 100, the discharge line fluidly connected to and extending from an outlet port 128 of the compressor 100 or any another suitable neighboring component. In the illustrated, non-limiting embodiment, the top 120 of the compressor housing 102, also referred to herein as the compressor head, is secured within the trailer 22 or the structure of the refrigeration unit 30 via attachment at a single location and/or attachment points 130. In the illustrated, non-limiting embodiment, a mounting bracket, or another suitable type of mount 132 is connected to an exterior surface 134 of the compressor head 120. Although a mounting bracket 132 having a bent, general L-shape configuration is illustrated in the figure, it should be understood that a mounting bracket 132 having another configuration is also within the scope of the invention as set out in the appended claims. Further, it should be understood that the configuration of the mounting bracket 132 may vary based on the secondary component 122 to which the compressor head 120 is operably coupled. In an embodiment, the mounting bracket 132 is directly affixed to the compressor head 120 or may be integrally formed with the compressor head 120. For example, the mounting bracket 132 may be welded to the compressor head 120 (FIGS. 3 and 5) or connected thereto via one or more fasteners 136 (see FIG. 4). In other embodiments, the mounting bracket 132 may be indirectly connected to the compressor head 120.

A vibration isolator 140, such as a rubber or silicone grommet for example, is coupled to the mounting bracket 132. In an embodiment, as shown in FIG. 4, the vibration isolator 140 is secured to the mounting bracket 132 via one or more fasteners 142. In other embodiments, a mounting hole 144 (see FIG. 5) may be formed in a portion of the mounting bracket 132 and the vibration isolator 140 may be press fit into the mounting hole 144. In such embodiments, a portion of the vibration isolator 140 may extend beyond both opposing surfaces 146, 148 of the mounting bracket 132 defining the mounting hole 144. The mounting bracket 132 may be formed from a first material having a greater stiffness than the second material of the vibration isolator 140. For example, the mounting bracket 132 may be formed from a metal material, such as steel. Alternative materials include but are not limited to synthetic rubber, such as polychloroprene or ethylene propylene diene monomer, natural rubber, a metal mesh, and a plastic such as polyurethane for example. Further, the characteristics of the vibration isolator 140, or the characteristics of the vibration isolator 140 in combination with the mounting bracket 132 may be selected to provide both a desired axial stiffness and a desired radial stiffness. The axial stiffness and the radial stiffness provided by the vibration isolator 140 associated with the single attachment point 130 at the compressor head 120 may be comparable to the axial and radial stiffness provided by a combination of multiple vibration isolators arranged at different attachment locations in existing systems. In an embodiment, the axial stiffness provided by the vibration isolator is between about 150 and 5000 lbs/in (between about 26000 and 880000 N/m), such as between about 1000 and 3500 lbs/in (between about 180000 and 610000 N/m) for example, and the radial stiffness provided by the vibration isolator is between about 150 and 5000 lbs/in (between about 26000 and 880000 N/m), such as between about 250 and 3500 lbs/in (between about 44000 and 610000 N/m).

In some embodiments, a distal end 150 of the vibration isolator 140 may be located proximate a surface 152 of the secondary component 122 and may selectively engage the surface 152 of the secondary component 122, such as in response to vibration of the compressor 100. The distal end 150 of the vibration isolator 140 may be oriented generally parallel to the adjacent surface 152 of the secondary component 122 so as to maximize a surface area of engagement between the vibration isolator 140 and the secondary component 122. In other embodiments, the vibration isolator 140 may be mounted such that the vibration isolator 140 is in continuous contact with the surface 152 of the secondary component 122. Although the mounting bracket 132 is illustrated and described herein as being fixedly mounted to the compressor head 120 such that vibration isolator 140 is engageable with the secondary component 122, embodiments where the mounting bracket 132 is directly or indirectly fixedly mounted to the secondary component 122 and the vibration isolator 140 is engageable with the exterior surface 134 of the compressor head 120 are also within the scope of the invention as set out in the appended claims.

Further, with reference to FIG. 5, in other embodiments, a second mounting bracket 160 may be affixed to a surface of the secondary component 122 and may also be affixed to the vibration isolator 140. For example, the second mounting bracket 160 may be welded to the secondary component 122, or attached thereto via another suitable mechanism, such as one or more fasteners 162 for example. The second mounting bracket 160 may also be affixed to a portion of the vibration isolator 140, such as a distal end 150 thereof for example, in any suitable manner. As previously described, the vibration isolator 140 may be secured to the second mounting bracket 160 via one or more fasteners (not shown). Alternatively, the second mounting bracket 160 may have a mounting hole 164 formed therein, and the vibration isolator 140 maybe press fit within the mounting hole 164, thereby restricting movement of the vibration isolator 140 relative to the second mounting bracket 160.

During operation, vibration of the compressor 100 may be transferred to the vibration isolators 140 at the single attachment points 130 located at the compressor head 120. This vibration isolator may compress, such as against the secondary component 122 or the second mounting bracket 160 to absorb vibration of the compressor and prevent the transmission of these vibrations to the secondary component 122.

Because the compressor mounting system described herein has only have five attachment points instead of six, the compressor mounting system has fewer parts and therefore is more cost effective than the previous system. Further, the compressor mounting system as disclosed herein will be easier and require less time to install.

The term "about" is intended to include the degree of error associated with measurement of the particular quantity based upon the equipment available at the time of filing the application.

The terminology used herein is for the purpose of describing particular embodiments only and is not intended to be limiting of the scope of the present invention as set out in the appended claims. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention as set out in the appended claims. In addition, many modifications may be made to adapt a particular situation or material to the teachings of the present invention without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A compressor system of a transport refrigeration system (20), the compressor system comprising:
a compressor (100) including:
a compressor housing (102);
a compressor base (104) located at a bottom (106) of the compressor housing;
a compressor head (120) arranged at a top of the compressor housing; and
wherein the compressor is secured within the transport refrigeration system at a plurality of attachment points (110a-110d, 130), wherein at least one attachment point (110a-110d) of the plurality of attachment points is arranged at the compressor base and a single attachment point (130) of the plurality of attachment points is arranged at the compressor head.

2. The compressor system of claim 1, wherein the compressor system further includes:
a mounting bracket (132) arranged at the compressor head (120); and
a vibration isolator (140) coupled to the mounting bracket.

3. The compressor system of claim 2, wherein the mounting bracket (132) is welded to the compressor head (120).

4. The compressor system of claim 2, wherein the mounting bracket (132) is mechanically fastened to the compressor head (120).

5. The compressor system of claim 2, wherein the mounting bracket (132) is integrally formed with the compressor head (120).

6. The compressor system of any of claims 2-5, wherein the vibration isolator (140) is mechanically fastened to the mounting bracket (132).

7. The compressor system of any of claims 2-5, wherein the mounting bracket (132) includes a mounting hole (144) and the vibration isolator (140) is press fit within the mounting hole.

8. The compressor system of any of claims 2-7, wherein a distal end (150) of the vibration isolator (140) is positioned proximate a secondary component (122).

9. The compressor system of any of claims 2-7, wherein a distal end (150) of the vibration isolator (140) is mechanically coupled to a secondary component (122).

10. The compressor system of claim 9, wherein the single attachment point (130) arranged at the compressor head (120) includes a second mounting bracket (160) and the vibration isolator (140) is mechanically coupled to the secondary component (122) via the second mounting bracket.

11. The compressor system of claim 10, wherein the vibration isolator (140) is mechanically fastened to the second mounting bracket (160);
or, wherein the second mounting bracket (160) includes another mounting hole (164) and the vibration isolator (140) is press fit within the another mounting hole.

12. The compressor system of any of claims 8-11, wherein the secondary component (122) is a structural frame.

13. The compressor system of any of claims 8-11, wherein the secondary component (122) is a housing of a refrigeration unit (30) of the transport refrigeration system;
or, wherein the secondary component (122) is one of a suction line and a discharge line of the compressor (100).

14. The compressor system of any of claims 2-13, wherein the mounting bracket (132) is formed from a first material and the vibration isolator (140) is formed from a second material, the first material having a greater stiffness than the second material;
and/or, wherein the mounting bracket (132) is formed from steel.

15. The compressor system of claim 1, wherein the single attachment point (130) arranged at the compressor head (120) includes a direct connection between the compressor head and a frame of the transport refrigeration system.
